# EUROPÄISCHE PATENTSCHRIFT

(11) **EP 3 301 012 B1**
(45) Veröffentlichungstag und Bekanntmachung des Hinweises auf die Patenterteilung: **17.07.2019**
(21) Anmeldenummer: 17201371.6
(22) Anmeldetag: 29.05.2012
(51) Int. Cl.: B64C 1/12, B32B 37/10

(54) **VERBINDUNGSANORDNUNG ZUR AERODYNAMISCH GLATTEN VERBINDUNG ZWEIER PROFILELEMENTE UND VORRICHTUNG ZUR AUSBILDUNG DER VERBINDUNGSANORDNUNG**
CONNECTION ASSEMBLY FOR AERODYNAMICALLY SMOOTH JOINING OF TWO PROFILE ELEMENTS AND DEVICE FOR FORMING THE CONNECTION ASSEMBLY
DISPOSITIF DE RACCORDEMENT POUR RACCORDEMENT AÉRODYNAMIQUE LISSE DE DEUX ÉLÉMENTS PROFILÉS ET DISPOSITIF DE FORMATION DE DISPOSITIF DE RACCORDEMENT

(30) Priorität: 30.06.2011 DE 102011107624
(43) Veröffentlichungstag der Anmeldung: 04.04.2018
(62) Teilanmeldung aus: 12740038.0
(73) Patentinhaber: Airbus Defence and Space GmbH, 85521 Ottobrunn (DE)
(72) Erfinder: HAVAR, Tamas, Camas, WA 98607 (US); GEISTBECK, Mathias, 87719 Mindelheim (DE); MEYER, Meinhard, 81739 München (DE); ROHR, Oliver, 85521 Ottobrunn (DE); MEER, Thomas, 85625 Glonn (DE)
(74) Vertreter: Isarpatent

(56) Entgegenhaltungen:
- WO-A2-2009/118548
- DE-U1-202004 001 671
- JP-A- 2001 018 609
- US-A- 4 507 011
- US-A- 4 696 707
- US-A1- 2008 277 041

## Beschreibung

Die Erfindung betrifft eine Verbindungsanordnung zur fugenlosen und aerodynamisch glatten Verbindung zweier Profilelemente zur Bildung einer laminar umströmbaren Profilfläche und eine Vorrichtung.

Heutige Fügeverfahren im Flugzeugbau bestehen meist aus Bolzenverbindungen mit Toleranzen von ca. 0,1 mm. Das ist kein Problem denn die Herstelltoleranzen für Bauteile aus kohlefaserverstärktem Kunststoff und Metall liegen meist oberhalb dieses Wertes. Damit haben herkömmliche Anbindungskonzepte, beispielsweise von Nasen an Luftfahrzeug-Tragflügeln, Toleranzen über 0,3mm, welche für aerodynamische Profile mit turbulenter Strömung ausreichend sind.

Zunehmend besteht jedoch im Bereich der Luftfahrzeugentwicklung die Tendenz zur Reduzierung des Treibstoffverbrauches. Dazu wäre es wünschenswert, den Bereich der laminaren Anströmung von Profilflächen in Strömungsrichtung zu verlängern, was beispielsweise durch eine Grenzschichtabsaugung möglich ist. Für laminar umströmte Profilflächen sind diese Toleranzen um etwa eine Größenordnung zu hoch. Wenn beispielsweise eine Titannase mit einer eingebauten Pumpe zur Grenzschichtabsaugung an ein Tragflügelprofil aus kohleoder glasfaserverstärktem Kunststoff befestigt wird, so muss der Übergang der Titannase zur Kunststoffbox extrem sanft gestaltet werden und Toleranzen von weniger als 0,05 mm aufweisen. Dies ist mit derzeitigen Herstell- und Montagemöglichkeiten nicht umsetzbar.

Aufgabe der Erfindung ist es, eine Verbindungsanordnung und eine Vorrichtung, durch die die für eine laminare Umströmung erforderlichen geringen Toleranzen im Bereich von weniger als 0,05 mm einhält und automatisiert umsetzbar sind. Diese Aufgabe wird durch die Merkmale der unabhängigen Ansprüche gelöst. Vorteilhafte Weiterbildungen und Ausgestaltungen sind Gegenstand der abhängigen Ansprüche.

Insbesondere wird erfindungsgemäß eine Verbindungsanordnung zur fugenlosen und aerodynamisch glatten Verbindung zweier Profilelemente zur Bildung einer laminar umströmbaren Profilfläche mit einer Außenseite und einer Innenseite vorgeschlagen, wobei ein erstes Profilelement eine sich zum zweiten Profilelement hin erstreckende erste Fixierleiste mit einer Anzahl erster Bohrungen mit Fixierbolzen aufweist, und die Oberfläche der ersten Fixierleiste gegenüber den Oberflächen der Profilelemente zur Außenseite hin tiefer liegt, ferner das zweite Profilelement eine innenseitig angeformte unterhalb der ersten Fixierleiste angeordnete zweite Fixierleiste mit zu den ersten Bohrungen fluchtenden zweiten Bohrungen zur Aufnahme der Fixierbolzen aufweist, wodurch die beiden Profilelemente miteinander starr verbunden sind, und ein unterhalb der Verbindungsfläche zwischen den Profilflächen und oberhalb der Fixierleistenoberfläche befindlicher Füllbereich mit mindestens zwei Lagen ausgehärteten Füllmaterials gefüllt ist.

Es wird ein Verfahren zur Ausbildung der Verbindungsanordnung, nur als Beispiel und nicht Teil der Erfindung, vorgeschlagen, bei dem in einem ersten Füllschritt der Füllbereich mit einer ersten Füllmateriallage teilweise ausgefüllt wird und mit einem in Verbindungslängsrichtung bewegten Abzugsrakel die Oberfläche des Füllmaterials geglättet und die erste Füllmateriallage anschließend ausgehärtet wird, und in einem zweiten Füllschritt eine zweite Füllmateriallage zum vollständigen Ausfüllen des Füllbereich aufgebracht wird und die Oberfläche der zweiten Füllmateriallage formgebend geglättet wird und diese anschließend ausgehärtet wird. Es sei dabei angemerkt, dass die Aufbringung des Füllmaterials auch in mehr als zwei Schritten erfolgen kann, was allerdings die Wirtschaftlichkeit reduziert.

Hierdurch wird der Einsatz heutiger Herstell- und Fertigungsverfahren zur Montage und Glättung von Stoßstellen miteinander verbundener Bauteile zur Bildung laminar umströmter aerodynamischer Profile möglich. Dabei ist ein hoher Automatisierungsgrad möglich, was kostengünstige aerodynamisch anspruchsvolle Fügungen realisieren lässt.

Als Füllmaterial wird vorzugsweise eines mit einem Schrumpf von weniger als 5% verwendet, um ein übermäßiges Einfallen des Füllmaterials zu vermeiden. Ferner sollte das Füllmaterial eine ausreichend hohe Haftfestigkeit aufweisen, insbesondere auf Metall (Titan) von mehr als 20 MPa. Vorzugsweise sollte das Füllmaterial eine Qualität Gt0 bis Gt2 nach dem sog. Gitterschnitttest der ausgehärteten Füllmassenoberfläche nach der Nassauslagerung als auch nach 1000-fachen Temperaturzyklen zwischen -55°C und 120°C aufweisen. Geeignete Füllmaterialien sind beispielsweise Seevenax der Fa. Mankiewicz, Loctite 3336, DP490 oder DP190 der Fa. 3M.

Gemäß einer vorteilhaften Weiterbildung der Erfindung besteht eines der Profilelemente aus Kunststoff, und das andere aus Metall. Als Kunststoff eines der Profilelemente wird vorzugsweise kohle- oder glasfaserverstärkter Kunststoff Verwendung finden. Es ist natürlich im Rahmen der Erfindung genauso möglich, beide Profilelemente aus Kunststoff oder Metall zu fertigen.

Unter "Verbindungslängsrichtung" wird in diesem Zusammenhang die Richtung verstanden, entlang der eine Verbindung der beiden Profilelemente erfolgt, d.h. senkrecht zur Luftströmungsrichtung bei der späteren Umströmung.

Erfindungsgemäß wird eine Vorrichtung nach Anspruch 5 zur Bearbeitung des Füllbereichs einer erfindungsgemäßen Vebrindungsanordnung vorgeschlagen, die mindestens zwei Anpressrollen sowie ein um die Anpressrollen laufendes Umlaufband umfasst und in Verbindungslängsrichtung automatisiert bewegbar ist. Eine solche Vorrichtung kann automatisch, insbesondere mittels eines Roboters oder entsprechender Führungen bewegt werden und ermöglicht daher einen sehr wirtschaftlichen Automatisierungsgrad der Fertigung.

Die erfindungsgemäße Vorrichtung umfasst ferner zwischen den zwei Anpressrollen mindestens einen gegen das Umlaufband und damit auch gegen die Oberfläche des Füllmaterials vorgespannten Heizblock. Eine solche Vorrichtung ist baulich einfach und ermöglicht bei der Oberflächenglättung gleichzeitig eine Aushärtung mittels Hitze. Oder es werden zwei solche Vorrichtungen, eine erste ohne Heizblock zur Formgebung und eine zweite mit Heizblock vor allem zur Aushärtung hintereinander entlang der Verbindungsanordnung bewegt.

Gemäß noch einer vorteilhaften Weiterbildung dieser Vorrichtung sind eine Anzahl hintereinander angeordnete Heizblöcke vorgesehen, die vorzugsweise individuell vorgespannt sind. Damit lässt sich der Aushärte- und Glättevorgang noch präziser steuern.

Gemäß noch einer vorteilhaften Weiterbildung dieser Vorrichtung sind zusätzlich zu den mindestens zwei Anpressrollen zwei nicht mit der Verbindungsanordnung kontaktierbare Ausgleichsrollen vorgesehen, die komplementär zur Form der Anpressrollen so geformt sind, dass das Umlaufband über der Breite gleichmäßig gespannt ist.

Weiterhin umfasst die erfindungsgemäße Vorrichtung mindestens eine Einfüllvorrichtung zur Einbringung von Füllmaterial in den Füllbereich. Auf diese Weise lässt sich der Einfüllvorgang des Füllmaterials der zweiten Füllmateriallage vereinfachen.

Gemäß noch einer vorteilhaften Weiterbildung der Erfindung ist diese Vorrichtung mit einer zweiten gleichartigen Vorrichtung in einer gemeinsamen Halterung gehalten, die bei-de in einer gemeinsamen Halterung gegeneinander drückbar sind und eine beiderseitige Bearbeitung von zwei auf gegenüberliegenden Seiten der Profilfläche befindlichen Verbindungsanordnungen ermöglicht. Damit lässt sich der Fertigungsvorgang noch weiter vereinfachen, wobei durch die gleichzeitige Aufbringung der Druckkräfte von beiden Seiten auf das Profil der Aufwand zur Fixierung desselben geringer ist.

Weitere Vorteile, Merkmale und Einzelheiten ergeben sich aus der nachfolgenden Beschreibung, in der - unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung, gegebenenfalls auch unabhängig von den Ansprüchen, und können insbesondere zusätzlich auch Gegenstand einer separaten oder mehrerer separater Anmeldung/en sein. Gleiche, ähnliche und/oder funktionsgleiche Teile sind mit gleichen Bezugszeichen versehen.

Es zeigen:
- Figur 1:: eine perspektivische Darstellung der Anwendbarkeit der erfindungsgemäßen Verbindungsanordnung;
- Figur 2:: eine Darstellung eines Flugzeug-Seitenleitwerks mit Nasenbereich;
- Figur 3:: eine perspektivische Darstellung einer Verbindungsanordnung ohne Füllmaterial;
- Figur 4:: eine perspektivische Darstellung einer Verbindungsanordnung mit Füllmaterial;
- Figur 5:: eine schematische Schnittdarstellung durch einen Verfüllungsschritt mit Füllmasse;
- Figur 6:: eine erste Ausführung einer Vorrichtung zur Durchführung des Verfahrens zur Fertigung der Verbindungsanordnung;
- Figur 7:: eine zweite Ausführung einer Vorrichtung zur Durchführung des Verfahrens zur Fertigung der Verbindungsanordnung; und
- Figur 8:: eine schematische Darstellung einer Anordnung zur beiderseitigen Bearbeitung einer Profilfläche.

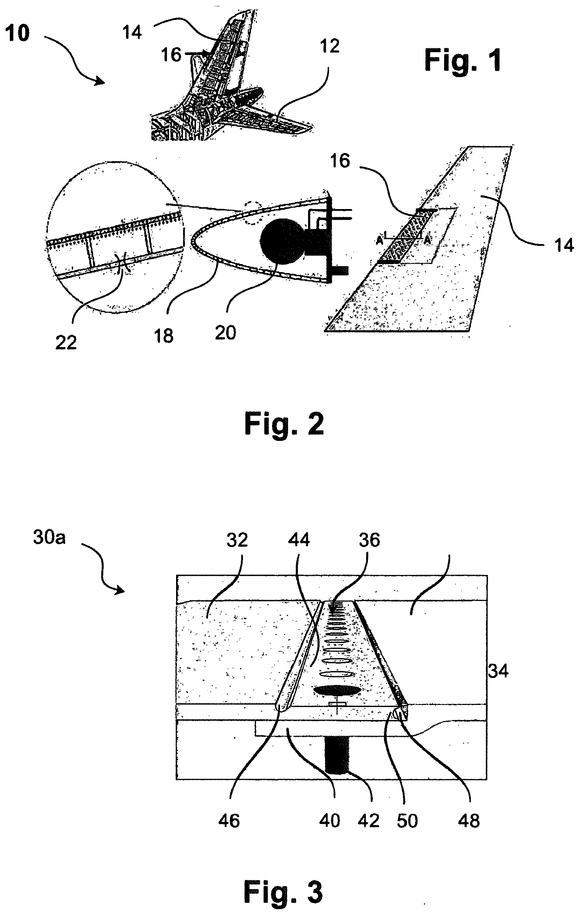

In Figur 1 ist schematisch der Heckbereich 10 eines Luftfahrzeugs dargestellt mit Höhenleitwerk 12 und einem Seitenleitwerk 14. Mit 16 ist der Vorderkantenbereich des Seitenruders 14 bezeichnet, in dem zunächst eine laminare Strömung vorliegt, die jedoch nach relativ kurzer Strecke turbulent wird. Um den Bereich der laminaren Strömung zu verlängern - wie in Figur 2 dargestellt ist - wird im vorderen Teil des Seitenleitwerks 14 eine Haube oder Nase 18 befestigt, in deren Inneren mindestens eine Saugpumpe 20 angeordnet ist, mittels der über in der Außenhaut der Nase 18 angeordneter Sauglöcher 22 Luft aus der turbulenten Grenzschicht abgesaugt und damit der Bereich der laminaren Strömung verlängert wird, wodurch der Reibungswiderstand sinkt und damit weniger Treibstoff verbraucht wird. Um diesen Effekt optimal nützen zu können, ist es wichtig, dass der Übergang von der Nase 18 zur normalen Struktur des Seitenleitwerks 14 mit sehr geringen Toleranzen, also möglichst glatt ausgebildet wird, sonst bildet sich an dieser Stelle eine Verwirbelung und damit ein Übergang in turbulente Strömung. Die erfindungsgemäße Verbindungsanordnung kann jedoch in gleicher Weise auch bei dem Höhenleitwerk 12 oder nicht dargestellten Tragflügeln zur Anwendung kommen.

In Figur 3 ist eine perspektivische Darstellung einer Verbindungsanordnung 30a dargestellt, bei der eine erste Profilfläche 32 mit einer zweiten Profilfläche 34 miteinander verbunden werden soll. Vorzugsweise ist die erste Profilfläche 32 aus Titan und die zweite Profilfläche 34 aus CFK gefertigt. Die erste Profilfläche 32 weist eine angeformte und sich in Richtung der zweiten Profilfläche 34 erstreckende erste Fixierleiste 36 auf, die eine Anzahl an Bohrungen 38 aufweist. An der zweiten Profilfläche 34 ist in analoger Weise eine zweite Fixierleiste 40 angeformt, die ebenfalls - nicht dargestellte - Bohrungen aufweist, die mit den Bohrungen 38 der ersten Fixierleiste 36 fluchten für die Montage von Bolzen 42a (Nieten oder Schrauben) zur Befestigung der beiden Profilflächen 32, 34 aneinander. Damit kann beispielsweise die in Figur 1 und 2 gezeigte Nase 18 des Seitenleitwerks 14 gebildet werden.

Die Oberfläche 44 der oberen Fixierleiste 36 liegt gegenüber den Oberflächen der beiden Profilflächen 32, 34 um eine gewisse Strecke, vorzugsweise 0,2 bis 0,5 mm tiefer, wodurch oberhalb der Fixierleistenoberfläche 44 bis zur Verbindungsfläche der beiden Profilflächen 32, 34 ein Füllbereich 45 definiert ist, der mit Füllmaterial befüllt ist. Ferner ist im Übergang von der ersten Profilfläche 32 zur zugehörigen Fixierleiste 36 eine Nut 46 angeordnet, die dazu dient, eine verbesserte Anbindung des Füllmaterials an die Struktur zu unterstützen. Die erste Fixierleiste 36 hat eine solche Erstreckung, die einen Spalt 48 zur zweiten Profilleiste 34 bzw. zur zweiten Fixierleiste 40 belässt. Ferner weist die Stirnfläche der ersten Fixierleiste 36 eine Nut 50 auf, die eine Hinterschneidung darstellt, und ein Reservoir zur Aufnahme übermäßigen Füllmaterials sowie eine Fixierung des ausgehärteten Füllmaterials ermöglicht, die zusätzlich zur Haftung auf der Oberfläche 44 wirkt.

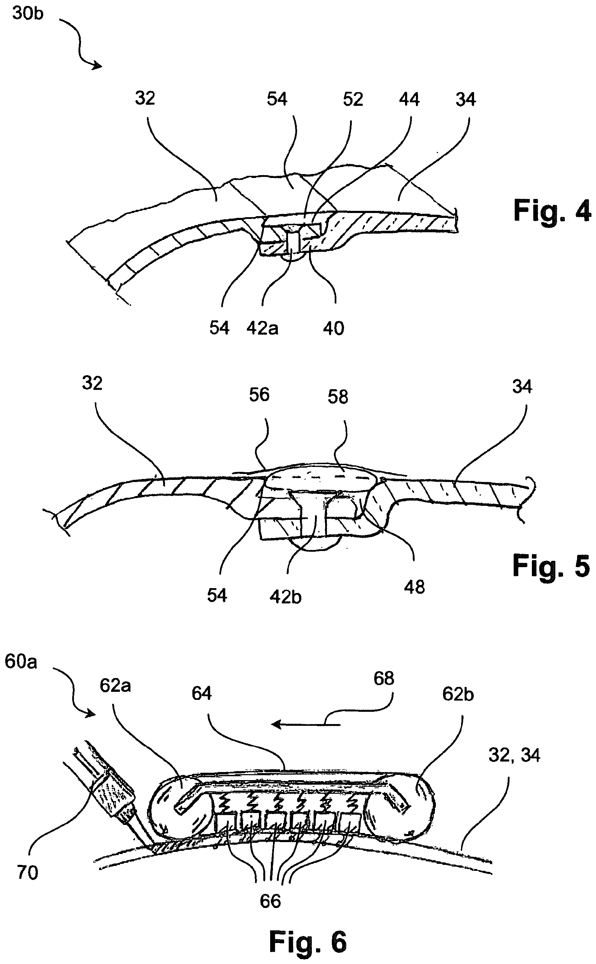

In Figur 4 ist eine perspektivische Darstellung einer fertigen Verbindungsanordnung 30b dargestellt, die mit Füllmaterial 52 ausgefüllt ist. Dabei ist die Dicke des Füllmaterials 52 über der Oberfläche 44 übertrieben dick dargestellt. Gleiche Teile wie in Figur 2 sind mit gleichen Bezugszeichen versehen. Bei dieser Anordnung ist eine Hinterschneidung 54 vorhanden, welche ebenfalls dazu beiträgt, das Füllmaterial 52 zu fixieren. Außen wird eine ebene und hochgradig glatte Verbindungsfläche 55 zwischen den Oberflächen der Profilleisten 32 und 34 gebildet.

In Figur 5 ist im schematischen Schnitt ein Verfahren zum Ausfüllen der ersten Füllmateriallage mittels einer Trennfolie 56 dargestellt. Gleiche Bezugszeichen bezeichnen gleiche Bauteile wie in den anderen Figuren. Dabei werden bei dieser Ausführungsform Senkkopfbolzen 42b verwendet, deren Bolzenköpfe über die Oberfläche 44 hinausragen und damit pilzkopfartige Vorsprünge bilden, die von Füllmaterial 58 umschlossen werden, was ebenfalls eine Fixierung für das ausgehärtete Füllmaterial bildet. Das Füllmaterial 58 wird in den Füllbereich gespritzt und ragt möglicherweise zunächst über die spätere Kontur hinaus, bildet also einen Wulst, während gleichzeitig noch nicht alle Hohlräume ausgefüllt sind, insbesondere nicht die Nut 48. Anschließend wird eine Trennfolie 56 über dem Füllmaterial 58 platziert und danach mit einem Abzugsrakel die Endkontur aufgeprägt, wobei das Füllmaterial 58 unter die Hinterschneidung 54, unter den Senkkopfbolzen 42b und in die Nut 48 gedrückt wird. Dabei bleibt die Oberfläche der so gebildeten ersten Füllmateriallage unterhalb der vorzugsweise näherungsweise eindimensional gekrümmten - mit einer gestrichelten Linie angedeuteten - Verbindungsfläche 55 zwischen den Oberflächen der Profilflächen 32, 34. Anschließend erfolgt, vorzugsweise mittels Hitze, ein Aushärten des Füllmaterials 58. Anschließend kann in einem zweiten, weitgehend identischen Schritt die zweite Füllmateriallage auf die untere Lage aufgebracht werden, die dann die endgültige Außenkontur bildet.

In Figur 6 ist eine erste Ausführung einer Vorrichtung 60a zur Durchführung des vorbeschriebenen Verfahrens dargestellt, die im Wesentlichen aus zwei Anpressrollen 62a, 62b und einem Umlaufband 62 besteht, das um die beiden Anpressrollen 62a, 62b geführt ist. Im Bereich zwischen den Anpressrollen 62a, 62b befinden sich eine Anzahl Heizblöcke 66, die einzeln mittels Federn gegen das Umlaufband 64 bzw. die beim Fertigungsvorgang darunter angeordneten Profilflächen 32, 34 gedrückt werden. Im Betrieb bewegt sich die Vorrichtung 60a in der mit dem Pfeil 68 bezeichneten Richtung. Vor der Vorrichtung 60a wird mittels einer Einspritzvorrichtung 70, die auch an der Vorrichtung 60a angebracht sein kann, das Füllmaterial in den Füllbereich zwischen den Profilflächen 32, 34 gedrückt.

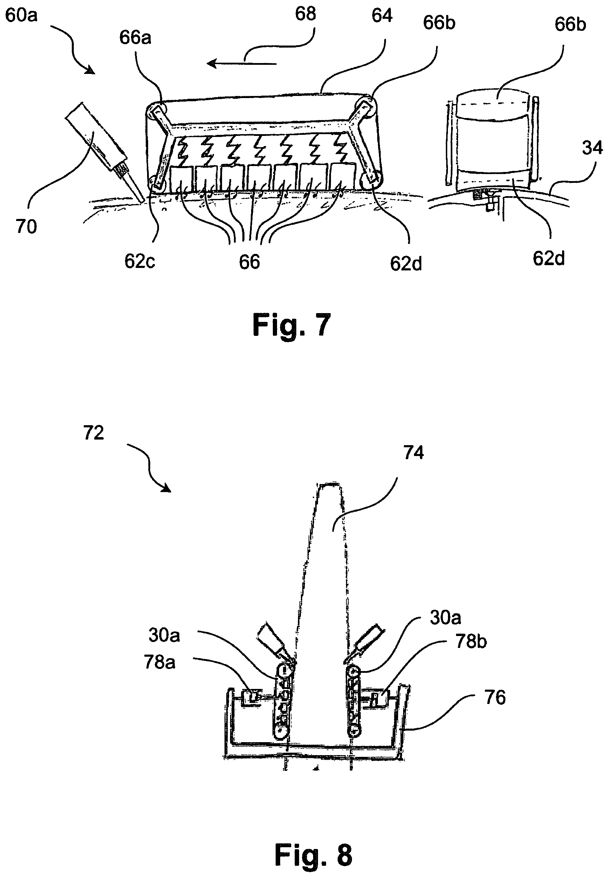

In Figur 7 ist eine zweite Ausführung einer Vorrichtung 60b zur Durchführung des vorbeschriebenen Verfahrens in zwei Ansichten dargestellt, bei der gleiche Bezugszeichen gleiche Teile wie in Figur 6 bezeichnen. Im Unterschied zur Ausführung gemäß Figur 6 weist die Vorrichtung 60b zwei Anpressrollen 62c, 62d auf, die keine zylindrische Form sondern vielmehr die Form eines Hyperboloiden aufweist, also im Mittelbereich dünner sind, so dass die typischerweise eindimensional gekrümmte Verbindungskontur zwischen den Profilflächen 32, 34 aufgeprägt werden kann. Damit das Umlaufband 64 gleichmäßig gespannt ist, weist die Vorrichtung 60b zwei Ausgleichsrollen 66a, 66b auf, die komplementär zu den Anpressrollen 62c, 62d geformt sind, also etwa fassförmig.

In Figur 8 ist eine Anordnung 72 zur gleichzeitigen Bearbeitung von zwei Verbindungsanordnungen dargestellt, die auf beiden Seiten eines Profils 74 angeordnet sind, um beispielsweise eine Nase 18 (Figur 2) gleichzeitig an beiden Verbindungsenden an dem Profil 74 zu befestigen. Die Anordnung 72 umfasst einen Rahmen 76, an dem zwei der in Figur 6 dargestellten Vorrichtungen 30a - es kann natürlich alternativ auch die in Figur 7 dargestellte alternative Vorrichtung 60b verwendet werden - über Hubeinrichtungen 78a, 78b angebracht sind. Mittels der Hubeinrichtungen 78a, 78b werden die beiden Vorrichtungen 30a jeweils gegen das Profils 74 im Bereich der beiden Verbindungsanordnungen gedrückt, wobei sich die ausgeübten Kräfte gegenseitig aufheben und nur ein geringer Aufwand zur Fixierung des Profils 74 erforderlich ist. Durch die gleichzeitige Bearbeitung auf beiden Seiten reduziert sich die Fertigungszeit auf ca. die Hälfte.

### BEZUGSZEICHENLISTE

- 10: Heckbereich eines Luftfahrzeugs
- 12: Höhenleitwerk
- 14: Seitenleitwerk
- 16: Vorderkantenbereich
- 18: Haube oder Nase
- 20: Saugpumpe
- 22: Sauglöcher
- 30a,b: Verbindungsanordnung
- 32: erste Profilfläche
- 34: zweite Profilfläche
- 36: erste Fixierleiste
- 38: Bohrungen
- 40: zweite Fixierleiste
- 42: Bolzen
- 44: Oberfläche von 36
- 45: Füllbereich
- 46: Nut
- 48: Spalt
- 50: Nut
- 52: Füllmaterial
- 54: Hinterschneidung
- 55: Verbindungsfläche
- 56: Trennfolie
- 58: Füllmaterial
- 60a,b: Vorrichtung
- 62a-d: Anpressrollen
- 64: Umlaufband
- 66a,b: Ausgleichsrollen
- 70: Einspritzvorrichtung
- 72: Anordnung
- 74: Profil
- 76: Rahmen
- 78a,b: Hubeinrichtungen

## Patentansprüche

1. Verbindungsanordnung zur fugenlosen und aerodynamisch glatten Verbindung zweier Profilelemente (32, 34) zur Bildung einer laminar umströmbaren Profilfläche mit einer Außenseite und einer Innenseite, wobei ein erstes Profilelement (32) eine sich zum zweiten Profilelement (34) hin erstreckende erste Fixierleiste (36) mit einer Anzahl erster Bohrungen (38) mit Fixierbolzen (42) aufweist, und die Oberfläche (44) der ersten Fixierleiste (36) gegenüber den Oberflächen der Profilelemente (32, 34) zur Außenseite hin tiefer liegt, ferner das zweite Profilelement (34) eine innenseitig angeformte unterhalb der ersten Fixierleiste (36) angeordnete zweite Fixierleiste (40) mit zu den ersten Bohrungen fluchtenden zweiten Bohrungen zur Aufnahme der Fixierbolzen (42) aufweist, wodurch die beiden Profilelemente (32, 34) miteinander starr verbunden sind, und **gekennzeichnet durch** ein oberhalb der Fixierleistenoberfläche (44) befindlicher Füllbereich (45) mit mindestens zwei Lagen ausgehärteten Füllmaterials (52) gefüllt ist.

2. Verbindungsanordnung nach Anspruch 1, **dadurch gekennzeichnet, dass** eines der Profilelemente (32, 34) aus Kunststoff, vorzugsweise einem Kohlefaserverbundwerkstoff, und das andere aus Metall, vorzugsweise einer Titanlegierung besteht.

3. Verbindungsanordnung nach Anspruch 2, **dadurch gekennzeichnet, dass** die Verbindungsfläche zwischen den Profilflächen (32, 34) eine Stufe mit der Höhe der Dicke einer auf dem Kunststoffprofilelement aufgebrachten Lackschicht aufweist.

4. Verbindungsanordnung nach Anspruch 1, **dadurch gekennzeichnet, dass** der Übergang vom ersten und/oder zweiten Profilelement (32, 34) zur zugehörigen Fixierleiste (36, 40) einen Hinterschneidungsbereich (54) aufweist.

5. Vorrichtung zum Bearbeiten des Füllbereichs einer Verbindungsanordnung gemäß einem der voranstehenden Ansprüche, mit: mindestens zwei Anpressrollen (62a, 62b) ; einem um die Anpressrollen (62a, 62b) laufenden Umlaufband (64); mindestens einem gegen das Umlaufband vorgespannten Heizblock (66), welcher zwischen den zwei Anpressrollen (62a, 62b) angeordnet ist; **gekennzeichnet durch** mindestens einer Einfüllvorrichtung (70) zur Einbringung von Füllmaterial in den Füllbereich (45), wobei die Vorrichtung in einer Verbindungslängsrichtung automatisiert bewegbar ist.

6. Vorrichtung nach Anspruch 5 , **dadurch gekennzeichnet, dass** eine Anzahl hintereinander angeordneter Heizblöcke (66) vorgesehen ist.

7. Vorrichtung nach Anspruch 5 oder 6, **dadurch gekennzeichnet, dass** zusätzlich zu den zwei Anpressrollen (62c, 62d) zwei nicht mit der Verbindungsanordnung kontaktierbare Ausgleichsrollen (66a, 66b) vorgesehen sind, die komplementär zur Form der Anpressrollen (62c, 62d) so geformt ist, dass das Umlaufband (64) über der Breite gleichmäßig gespannt ist.

8. Vorrichtung nach einem der Ansprüche 5 bis 7, **dadurch gekennzeichnet, dass** diese mit einer zweiten Vorrichtung (60a) in einer gemeinsamen Halterung (76) gehalten ist und gegeneinander drückbar sind und eine beiderseitige Bearbeitung von zwei auf gegenüberliegenden Seiten der Profilfläche befindlichen Verbindungsanordnungen (60a, 60b) erfolgt.

## Claims

1. Connection assembly for the continuous and aerodynamically smooth connection of two profile elements (32, 34) to form a profile surface over which a laminar flow can pass, with an outer side and an inner side, wherein a first profile element (32) has, extending towards the second profile element (34), a first securing strip (36) with a number of first bores (38) with securing pins (42), and the surface (44) of the first securing strip (36) being deeper with respect to the outer side than the surfaces of the profile elements (32, 34), moreover the second profile element (34) has a second securing strip (40) formed on the interior side and arranged below the first securing strip (36), with second bores, aligned with the first bores, for receiving the securing pins (42), whereby the two profile elements (32, 34) are rigidly connected to one another, and **characterized by** a filling region (45), located above the securing strip surface (44), which is filled with at least two layers of cured filler (52).

2. Connection assembly according to Claim 1, **characterized in that** one of the profile elements (32, 34) is made of synthetic material, preferably a carbon fibre composite material, and the other is made of metal, preferably a titanium alloy.

3. Connection assembly according to Claim 2, **characterized in that** the connection face between the profile surfaces (32, 34) has a step, the height of which is the thickness of a coat of lacquer applied to the synthetic profile element.

4. Connection assembly according to Claim 1, **characterized in that** the transition from the first and/or second profile element (32, 34) to the associated securing strip (36, 40) has an undercut region (54).

5. Device for machining the filling region of a connection assembly according to one of the preceding claims, with:
at least two pressing rollers (62a, 62b);
a continuous belt (64) running around the pressing rollers (62a, 62b);
at least one heating block (66) which is preloaded against the continuous belt and which is arranged between the two pressing rollers (62a, 62b);
**characterized by** at least one filling device (70) for introducing filler into the filling region (45),
wherein the device can be moved autonomously in a connection longitudinal direction.

6. Device according to Claim 5, **characterized in that** there is provided a number of heating blocks (66), arranged one behind the other.

7. Device according to Claim 5 or 6, **characterized in that**, in addition to the two pressing rollers (62c, 62d), there are provided two equalizing rollers (66a, 66b) which are not able to be brought into contact with the connection assembly and which are formed in complementary fashion to the shape of the pressing rollers (62c, 62d) in such a way that the continuous belt (64) is evenly tensioned over the entire width.

8. Device according to one of Claims 5 to 7, **characterized in that** this device is held with a second device (60a) in a shared jig (76), and can be pressed against one another and two connection assemblies (60a, 60b) on opposite sides of the profile surface are processed on both sides.

## Revendications

1. Dispositif de raccordement pour le raccordement sans joint et aérodynamiquement lisse de deux éléments profilés (32, 34) pour la formation d'une face profilée pouvant être balayée de façon laminaire avec un côté extérieur et un côté intérieur, dans lequel un premier élément profilé (32) présente une première barre de fixation (36) s'étendant en direction du second élément profilé (34) avec un nombre de premier trous (38) avec des boulons de fixation (42), et la surface (44) de la première barre de fixation (36) est abaissée par rapport aux surfaces des éléments profilés (32, 34) en direction du côté extérieur, en outre le second élément profilé (34) présente une seconde barre de fixation (40) formée du côté intérieur disposée en dessous de la première barre de fixation (36) avec des seconds trous alignés avec les premiers trous pour recevoir les boulons de fixation (42), les deux éléments profilés (32, 34) étant ainsi rigidement assemblés l'un à l'autre, et **caractérisé par** une zone de remplissage (45) se trouvant au-dessus de la surface (44) de la barre de fixation, qui est remplie avec au moins deux couches de matière de remplissage durcie (52).

2. Dispositif de raccordement selon la revendication 1, **caractérisé en ce qu'**un des éléments profilés (32, 34) est constitué de matière plastique, de préférence d'un matériau composite en fibres de carbone, et l'autre est constitué de métal, de préférence d'un alliage de titane.

3. Dispositif de raccordement selon la revendication 2, **caractérisé en ce que** la face de raccordement entre les faces profilées (32, 34) présente un gradin de la hauteur de l'épaisseur d'une couche de laque appliquée sur l'élément profilé en matière plastique.

4. Dispositif de raccordement selon la revendication 1, **caractérisé en ce que** la transition du premier et/ou du second élément profilé (32, 34) à la barre de fixation correspondante (36, 40) présente une zone de contre-dépouille (54).

5. Dispositif pour traiter la zone de remplissage d'un dispositif de raccordement selon l'une quelconque des revendications précédentes, avec:
au moins deux rouleaux de pression (62a, 62b);
une bande rotative (64) tournant autour des rouleaux de pression (62a, 62b);
au moins un bloc chauffant (66) serré contre la bande rotative, qui est disposé entre les deux rouleaux de pression (62a, 62b);
**caractérisé par** au moins un dispositif de remplissage (70) pour l'introduction de matière de remplissage dans la zone de remplissage (45), dans lequel le dispositif est déplaçable de façon automatisée dans une direction longitudinale du raccordement.

6. Dispositif selon la revendication 5, **caractérisé en ce qu'**il est prévu un nombre de blocs chauffants (66) disposés l'un derrière l'autre.

7. Dispositif selon une revendication 5 ou 6, **caractérisé en ce qu'**il est prévu, en plus des deux rouleaux de pression (62c, 62d) deux rouleaux de compensation (66a, 66b) ne pouvant pas être contactés avec le dispositif de raccordement, qui sont formés de façon complémentaire à la forme des rouleaux de pression (62c, 62d), de telle manière que la bande rotative (64) soit tendue uniformément sur la largeur.

8. Dispositif selon l'une quelconque des revendications 5 à 7, **caractérisé en ce que** celui-ci est maintenu avec un second dispositif (60a) dans un support commun (76) et peuvent être pressés l'un contre l'autre et on effectue un traitement sur les deux côtés de deux dispositifs de raccordement (60a, 60b) se trouvant sur des côtés opposés de la face profilée.
